# EUROPÄISCHE PATENTSCHRIFT

(11) **EP 0 879 696 B1**
(45) Veröffentlichungstag und Bekanntmachung des Hinweises auf die Patenterteilung: **02.04.2003**
(21) Anmeldenummer: 98109455.0
(22) Anmeldetag: 25.05.1998
(51) Int. Cl.: B32B 31/08, D21H 25/18

(54) **Verfahren und Vorrichtung zum Einbringen einer Kernschicht in die Mittelebene eines Kaschierverbundes**
Method and apparatus for incorporating a central layer in a laminate
Procédé et dispositif pour incorporer une couche centrale dans un laminé

(30) Priorität: 23.05.1997 DE 19721705
(43) Veröffentlichungstag der Anmeldung: 25.11.1998
(73) Patentinhaber: Becker Preservotec GmbH, 71364 Winnenden (DE)
(72) Erfinder: Becker, Ernst, 73663 Berglen (DE); Wächter, Wolfgang, Dr., Hauptweg PSF 3/42 (DE); Gaibler, Hans-Peter, 71404 Korb (DE); Seidl, Günter, Dr., 09122 Chemnitz (DE)
(74) Vertreter: Alber, Norbert, Dipl.-Ing.

(56) Entgegenhaltungen:
- DD-A- 251 728
- US-A- 4 169 007

## Beschreibung

Die Erfindung betrifft das Einbringen einer Kernschicht in die Mittelebene eines blattförmigen Materials, etwa eines blattförmigen Kaschierverbundes, dessen Außenseiten jeweils kaschiert sind. Ein derartiges Einbringen einer Kernschicht wird beispielsweise bei der Restaurierung von Büchern, Handschriften, Noten, Zeitschriften, Loseblattsammlungen, Akten etc. angewandt. Dabei wird das Buch zunächst in einzelne Blätter zerlegt. Diese Blätter sind meist schon soweit beschädigt, daß sie Löcher oder Beschädigungen am Rand etc. aufweisen.

Zunächst werden diese makroskopischen Beschädigungen behoben, indem die beschädigten Seiten angefasert werden, also mit neuer Papiermasse verfüllt werden. Zu diesem Zweck werden in der Regel gleich mehrere beschädigte Blätter auf ein feines Siebgewebe nebeneinander gelegt und eine Schlämme, die Papierfasern enthält, darüber gegossen. Da die Schlämme nur durch die Beschädigungen der Seite nach unten abfließen kann, werden genau diese Beschädigungen und alle Zwischenräume zwischen den Seiten mit den Papierfasern verfüllt, und der Vorgang wird beendet, sobald an diesen Fehlstellen die ursprüngliche Dicke wieder erreicht ist. Diese makroskopisch wieder hergestellten Seiten werden im folgenden Formate genannt. Bei endloser Bearbeitung der beschädigten Seiten mittels Anfasern entstehen dabei keine Formate in Form einzelner Bögen, sondern ein Formatband.

Diese makroskopische Fehlstellenbeseitigung kann auch unterbleiben, und erst zu einem späteren Zeitpunkt, beispielsweise nach dem Einbringen der Kernschicht und Ablösen der Kaschierungen, nachgeholt werden. In diesem Fall dient dann das Kernmaterial als Sieb zum Zurückhalten der Papierfasern, die bei der Fehlstellenbeseitigung darüber gegossen werden.

Diese Formate sollen anschließend mechanisch und chemisch dadurch stabilisiert werden, daß in das Innere des Formates, also in dessen Längsmittelebene, eine stabilisierende Kernschicht eingebracht wird.

Zu diesem Zweck wird auf die beiden Seitenflächen des Formates ein Kaschiermaterial aufgebracht und flächig, fest mit dem Format verbunden, also z. B. verklebt.

Sofern diese Verklebung stärker ist als der innere Zusammenhalt des ursprünglichen Papiers des Formates, können die beiden Kaschierungen anschließend bezüglich der Mittelebene auseinandergezogen werden, wobei an jeder der beiden Kaschierungen die Hälfte des ursprünglichen Formates haften bleibt.

Diese beiden Hälften werden anschließend auf eine Kernschicht aufgebracht und mit diesem flächig verbunden, welches dann die Mitte des ursprünglichen Formates, also der ursprünglichen Buchseite, bildet. Anschließend werden die der vorherigen Handhabung dienenden Kaschierungen wieder entfernt, indem die Verklebung der Kaschierung mit dem Format physikalisch oder chemisch gelöst wird.

Durch die Kernschicht ist das ursprüngliche Format mechanisch wesentlich stabiler, und durch die Kernschicht und/oder die beteiligten Kleber wird das Ausgangsmaterial auch chemisch stabilisiert, insbesondere im Hinblick auf den pH-Wert gepuffert, da vor allem die im alten Papier bzw. dessen beschriftender Tinte oder Druckfarbe enthaltenen Säuren das Papier langfristig zerstören.

Die so aufbereiteten Formate werden anschließend auf die passende Größe geschnitten und neu zu einem Buch gebunden, in der Regel natürlich unter Verwendung der alten Buchdeckel und Buchrücken.

Dieses Verfahren ist an sich bekannt, wird jedoch bisher nur von Hand durchgeführt, da der Zustand jedes Buches hinsichtlich Art und Umfang der Beschädigungen, chemischer und physikalischer Beschaffenheit des Papiers etc. so unterschiedlich war, daß eine automatisierte oder teilautomatisierte Durchführung für nicht möglich gehalten wurde.

Dabei ist jedoch der Kostenaufwand für die Restaurierung eines Buches so hoch, daß nur wenige ausgewählte Werke auf diese Art und Weise gerettet werden können. Selbst wenn ausreichende finanzielle Mittel zur Verfügung stünden, ist die Anzahl der Fachkräfte, die in der Lage sind, derartige Arbeiten durchzuführen, so gering, daß vor einer endgültigen Zerstörung der gefährdeten Buchbestände nur maximal 5% noch gerettet werden könnten.

Die vorliegende Erfindung kann zum Einbringen einer Kemschicht im Rahmen des vorbeschriebenen Behandlungsablaufes eingesetzt werden, jedoch auch zum Einbringen in andere schwer handhabbare, insbesondere saugfähige, blattförmige Materialien.

Die Aufgabe gemäß der Erfindung besteht darin, ein Einbringverfahren sowie eine Vorrichtung zu seiner Durchführung zu schaffen, welche die vollautomatische oder teilautomatische Einbringung einer Kernschicht ermöglicht, und zwar weitestgehend unabhängig vom Ausgangsmaterial, also von der chemischen und physikalischen Zusammensetzung des Formates.

Dabei werden als Umgebungsbedingungen eine Luftfeuchtigkeit von größer als 40%, insbesondere von 50% - 60%, zu bevorzugen und eine Temperatur von mindestens 20°C, insbesondere von 22°C - 24°C.

Diese Aufgabe wird durch die Ansprüche 1 und 10 gelöst. Vorteilhafte Ausführungsformen ergeben sich aus den Unteransprüchen.

Dadurch, daß das Einbringen im Durchlaufverfahren erfolgt, kann einerseits die Effizienz des Verfahrens gesteigert werden, und andererseits können Steuerungs- bzw. Regelungsabläufe eingebracht werden, die bei einer Einzelblattbehandlung oder Chargenbehandlung nicht möglich sind, da die Voreinstellungen des vorherigen Stückes bzw. der vorherigen Charge, bei der nächsten nicht mehr zur Verfügung stehen.

Im gleichen Durchlaufverfahren stromaufwärts kann vorher auch bereits das eingangs beschriebene beidseitige Aufbringen einer Kaschierung und Auseinanderreißen des so entstandenen Kaschierverbundes in der Mitte der Formate bzw. beschädigten Blätter erfolgt sein, an welche sich das hier beschriebene Einbringen einer Kernschicht im Durchlaufverfahren unmittelbar anschließt.

Um im Durchlauf arbeiten zu können, wird der zu behandelnde Kaschierverbund entweder durch Abwickeln von einer Kaschierbobine, auf die der Kaschierverbund aufgewickelt ist, zugeführt, oder direkt, sozusagen "online", aus der vorangehenden Bearbeitungseinheit, die den Kaschierverbund erst erstellt.

Die beiden Hälften des bandförmigen Kaschierverbundes, also jeweils bestehend aus der außen liegenden Kaschierung und dem daran haftenden Teil der Mittelschicht, des ursprünglichen Formates, werden bezüglich ihrer Mittelebene auseinandergezogen, indem sie über Umlenkwalzen oder andere feststehende Umlenkkörper auseinander geführt, insbesondere in einem 90°-Winkel auseinander geführt werden. Die zur Umlenkung dienenden Umlenkkörper bzw. Spaltwalzen müssen dabei einen relativ kleinen Durchmesser von etwa 1-3 cm, insbesondere 15-20 mm, besitzen, um eine gleichmäßige Spaltung entlang der Mittelebene des Kaschierverbundes zu bewirken. Die der Auseinanderführung und Umlenkung dienenden sogenannten Spaltwalzen besitzen dabei einen Durchmesser von lediglich 1-3 cm, insbesondere von 15-200 mm.

Von dem Spaltpunkt, also dem Punkt der gegeneinander gepreßten Spaltwalzen, aus werden die beiden Hälften des Kaschierverbundes über eine sogenannte Einbringstrecke zunächst diametral voneinander weggeleitet, und dann im Abstand zueinander geführt und anschließend wieder durch Umlenkwalzen aufeinander zugeführt und an einem Kontaktpunkt wieder indirekt miteinander in Kontakt gebracht, indem zwischen die beiden Hälften eine Kernschicht in Form eines im wesentlichen endlosen, bahnförmigen Materials und unter Verwendung eines Klebers zu einem Kemverbund verklebt wird.

All dies geschieht insbesondere in der gleichen Durchlaufrichtung.

Die bahnförmige Kernschicht ist dabei auf einer Kernbobine aufgewickelt, welche vorzugsweise innerhalb der Einbringstrecke in dem Abstand zwischen den Bahnen untergebracht ist. Vor Erreichen des Kontaktpunktes wird vorzugsweise auf die beiden Hälften des gespaltenen Kaschierverbundes der Kernkleber aufgebracht.

Für die weitere Behandlung ist es dabei von Bedeutung, welche physikalischen und chemischen Eigenschaften der verwendete Kernkleber im Vergleich zu dem Kaschierungskleber, mit dessen Hilfe die außenliegenden Kaschierungen auf dem Kaschierverbund aufgeklebt wurden, besitzt. Insbesondere darf der Kernkleber unter den physikalischen undloder chemischen Bedingungen, unter welchen sich der Kaschierungskleber lösen läßt, nicht lösen lassen, da anschließend von dem fertigen Kernverbund in einem weiteren Bearbeitungsschritt die Kaschierung wieder entfernt werden soll. Die Kemschicht soll dabei - um optisch und vom physikalischen Biegeverhalten etc. her das Ausgangsmaterial möglichst wenig zu verändern - einerseits so dünn wie möglich sein, und andererseits sehr reißfest, um eine mechanische Beschädigung des restaurierten Buches in Zukunft weitestgehend zu vermeiden

In der Relation zwischen Dicke und Saugfähigkeit der Kernschicht einerseits und der Viskosität des Kernklebers andererseits ist zu bevorzugen, daß der Kernkleber die Kernschicht vollständig durchdringt. Dadurch kann später beim Entfernen der Kaschierung und damit wenigstens teilweisen Entfernung des Kaschierungsklebers von der Kernschicht, die dann als Depot für den Kernkleber wirkt, der Kernkleber in die dann oberflächennahen, äußeren Bereiche des kaschierungslosen Kernverbundes hinein diffundieren und dort die stabilisierende Rolle des bisherigen Kaschierungsklebers übernehmen.

Beim Spalten undloder beim wieder Zusammenführen des Kaschierverbundes unter Einlegen der Kernschicht ist es ebenfalls sehr wichtig, daß die beiden Hälften des Kaschierverbundes in der exakt ursprünglichen Lage wieder übereinander zu liegen kommen, also sowohl in Längs- als auch in Querrichtung der Bahn des Kaschierverbundes.

Um dies auf einfache Weise überprüfen zu können, werden im Durchlauf des Kaschierverbundes stromaufwärts des Spaltpunktes, vorzugsweise in regelmäßigen Abständen, in den Randbereichen Löcher eingestanzt. In der Regel ist es ausreichend, dies nur beim Anfahren der Anlage zur Überprüfung durchzuführen.

Da die Kemschicht die äußersten Ränder des Kaschierverbundes nicht erreicht, sondern nur den mittleren Bereich, in dem sich die Formate befinden, abdeckt, kann das exakt fluchtende Übereinanderliegen der Lochungen der beiden Hälften stromabwärts des Kontaktpunktes am fertigen Kernverbund mit optischen Mitteln leicht überprüft und durch entsprechende Steuerung bzw. Regelung eingestellt werden: zu diesem Zweck sind auf der Einbringstrecke die an den separat geführten Hälften des Kaschierverbundes anliegenden Umlenkwalzen verstellbar:

Eine der Umlenkwalzen ist quer zur Bahnrichtung der Hälfte verlagerbar, so daß dadurch die Bahnlänge dieser Hälfte zwischen dem Spaltpunkt und dem Kontaktpunkt verändert werden kann. Ebenso ist eine der Umlenkwalzen bezüglich einer quer zur Walzenerstreckung laufenden Schwenkachse wenigstens geringfügig verschwenkbar, um dadurch den Geradlauf bzw. die Seitenauslenkung dieser Hälfte des Kaschierverbundes steuern zu können. Zu diesem Zweck ist die entsprechende Umlenkwalze vorzugsweise in einem Pendellager gelagert, da die Umlenkwalze - wie alle Aggregate der entsprechenden Vorrichtung - nur einseitig an einer Zentralwand befestigt ist und von dieser frei auskragt. Dadurch sind von der anderen Seite her durch den Bediener fast alle Punkte innerhalb des Durchlaufes gut einsehbar und das Bearbeitungsergebnis optisch gut kontrollierbar.

Die durch den Kernkleber in den Kernverbund eingebrachte Feuchtigkeit muß durch Trocknen entfernt und gleichzeitig möglichst der Kemverbund gepreßt werden, um dessen Zusammenhalt zu verbessern. Gleichzeitig darf weder durch das Trocknen noch durch das Pressen die Relativlage der beiden Schichten zueinander verändert werden, weshalb die optische Überprüfung der Fluchtung der Lochungen in der oberen Hälfte und unteren Hälfte vorzugsweise nochmals am Ende, nach dem Trocknen und Pressen, überprüft wird.

Der bandförmige und im wesentliche endlose Kernverbund wird entsprechend während seines Durchlaufs getrocknet und gepreßt, also nicht chargenweise während der Zwischenlagerung zu einem nachfolgenden Bearbeitungsschritt, sondern während des Durchlaufs durch die Kernmaschine.

Dies wird möglich, da die in den Kernverbund durch den Kleber eingebrachte Feuchtigkeit abgeführt wird, indem der Kernverbund durch Überströmen mit trockener, ggf. erwärmter, Luft abtransportiert wird, anstelle der bisher verwendeten saugfähigen Fliese, die in Kontakt mit dem Kemverbund gebracht wurden und die Flüssigkeit primär abgesaugt hatten.

Zusätzlich wird der Kernverbund gepreßt, jedoch nicht permanent während des Durchlaufens durch die Trocknungsstrecke, sondern nur entlang einzelner, möglichst kurzer, Streckenabschnitte, beispielsweise in dem der Kemverbund mehrere Preßwalzenpaare hintereinander durchläuft, wobei das erste Preßwalzenpaar der Kontaktpunkt beim Einbringen der Kernschicht sein kann. Das Verpressen ist notwendig, um eine gute Haftung zwischen Kaschierung und Format zu erreichen, und insbesondere auch das Eindringen des Kernklebers in die Hälften des ehemaligen Kernverbundes bis zur gewünschten Tiefe zu bewirken.

Als Kernschicht sind zwei grundsätzlich verschiedene Materialien denkbar:

Entweder ein nicht bzw. möglichst wenig den Kernkleber aufsaugendes Material, beispielsweise ein sehr dünnes, aber reißfestes Kunststoffgewebe, wenn die mechanische Stabilisierung im Vordergrund stehen soll.

Die andere Möglichkeit ist die Verwendung eines Kempapiers, welches hinsichtlich seiner optischen und physikalischen Eigenschaften, insbesondere hinsichtlich seiner Struktur, dem Ausgangsmaterial möglichst nahe kommt. Beispielsweise kann hierfür Japanpapier verwendet werden, welches sich von europäischen Papiersorten im wesentlichen dadurch unterscheidet, daß es einen Anteil an langen Fasern aufweist, welches trotz der nur geringen Beimengung die Reißfestigkeit stark erhöht.

Bevorzugt wird als Kernschicht jedoch ein separat hergestelltes Papier verwendet, welches hinsichtlich Basismaterial, Farbe und Herstellprozeß dem Ausgangsmaterial, meist dem Papier des zu restaurierenden Buches, sehr nahe kommt, ggf. jedoch mehr langfaserige Anteile als dieses zur Erhöhung der Reißfestigkeit enthält, insbesondere Hanf-, Flachs- Leinenfasern, die gleichzeitig als Zelluloselieferant dienen und deren Anteil 5 bis 30 Gewichts-% betragen sollte. Das Kempapier bzw. die Kernschicht weist ein Flächengewicht von 5 bis 15 g/cm² auf, um möglichst wenig aufzutragen.

Weiterhin enthält das Kernpapier 3 bis 6% Carbonate, um mit den Carbonaten im Kemkleber zusammen zu wirken und eine gleichmäßige Carbonatverteilung über den Querschnitt des restaurierten Blattes zu ergeben. Die Carbonate dienen grundsätzlich als Säurepuffer für die insbesondere in den Tinten alter Bücher enthaltenen Säuren.

Als Kernkleber wird ein Kaltleim auf Zellulose-Ätherbasis, beispielsweise eine Mischung aus Methylzellulose und Carboxylzellulose, verwendet. Die Viskosität des Kernklebers beträgt dabei vorzugsweise 3.000 bis 5.000 mPa·s bei 20°C. Zusätzlich enthält der Kernkleber Erdalkalisalze zur Komplexbildung mit den Schwermetallen der früher verwendeten Tinten, ebenfalls 3-6 Gewichts-%, insbesondere 3-5 Gewichtsprozent, Carbonat, insbesondere Calciumcarbonat und/oder Magnesiumcarbonat als Säurepuffer, Fungizide wie Laptan etc., insbesondere natürliche Fungizide wie das WAID-Extrakt zur Verhinderung von Pilzbildung in den so behandelten restaurierten Büchern und ggf. Pigmente zur Farbanpassung bzw. Opazitätsanpassung an das Ausgangsmaterial. Durch zusätzliche geringe Mengen von Akrylaten ist eine Teilvernetzung des Kernklebers und damit eine Filmvernetzung erreichbar, was die Lösezeit des Kernklebers drastisch erhöht auf bis zu mehrere Tage Einwirkzeit. Dies erleichtert das spätere Ablösen der Kaschierung, was nur mit Hilfe des Anlösens des Kaschierungsklebers möglich ist.

Die Vorrichtung zur Durchführung des Verfahrens ist in der Regel als separate Arbeitsstation aufgebaut, d. h., der bahnförmige Kernverbund ist zur Behandlung einer bestimmten Chargenmenge auf einer Kaschierbobine aufgewickelt, die an der Maschine angeordnet ist.

Ebenso wird der fertige Kemverbund nicht sofort an die nächste Bearbeitungsstation zur zeitgleichen Weiterverarbeitung weitergeleitet, sondern auf einer Verbundbobine zur Zwischenlagerung aufgewickelt.

Diese Bobinen sind ebenso wie alle anderen Baugruppen, die sich über die Breite der Kaschierbahn erstrecken, nur einseitig, also frei auskragend an einer senkrechten Zentralwand befestigt, die das Maschinengestell bildet. Entlang dieser Zentralwand wird der Kernverbund horizontal entlanggeführt, gespalten und dann - möglichst auf der gleichen Höhenlage wie der Spaltpunkt - wieder unter Zwischenlegen der Kernschicht und Verleimung gegeneinander geführt. Dabei berühren die beiden Hälften des ursprünglichen Kaschierverbundes die dazwischen eingeführte Kernschicht am selben Punkt in Durchlaufrichtung. Hinter dem Kontaktpunkt, der durch zwei gegeneinander angepreßte Preßwalzen, zwischen denen der gesamte Kernverbund hindurchgeführt wird, besteht, und noch vor der anschließenden Trocknungsstrecke wird mit Hilfe einer Lochkontrolle die Fluchtung der oberen und unteren Hälfte des Kernverbundes überprüft, indem die vollständige Überlappung durch Vorhandensein eines vollständigen Lochquerschnittes überprüft wird. Dies ist beispielsweise durch die Messung der Menge des hindurchtretenden Lichtes automatisch möglich. Sobald die Fluchtung in Längs- oder in Querrichtung nicht exakt ist, wird durch Verstellung der Umlenkwalzen im Einbringbereich, in dem die beiden Hälften separat über ihre Umlenkwalzen geführt werden, ein Querversatz oder eine Verlängerung der Einbringstrecke für eine der Hälften bewirkt.

Der gesamte Kemverbund durchläuft dann ein erstes Preßwalzenpaar, um die Positionierung der drei Bestandteile zueinander zu verfestigen, indem durch die Pressung der Kernkleber in die Format und - bei einem saugfähigen Kernmaterial - auch in das Kernmaterial eindringt.

Anschließend läuft dieser Kernverbund immer noch horizontal waagerecht in einen Trocknungskasten, der ebenfalls an der Zentralwand befestigt ist, hinein und durchläuft diesen Trocknungskasten ebenfalls gerade, um während dieser Trocknung keine Biegung des Kernverbundes zu fixieren.

Erst nach dem Herauslaufen aus dem Trocknungskasten wird über eine Umlenkrolle mit großem Durchmesser eine Umlenkung des Kernverbundes zu der Kernbobine durchgeführt, die aus dem gleichen Grund ebenfalls einen Kern mit großem Durchmesser besitzt.

Das im wesentlichen geschlossene Gehäuse des Trocknungskastens wird mit trockener Luft durchströmt, die ggf. vor oder beim Einströmen in den Trocknungskasten erwärmt werden kann.

Im Verlauf der Strecke sind - insbesondere am Anfang und Ende - Umlenkwalzen vorhanden, die um eine Schwenkachse, welche senkrecht zur Rotationsachse der Umlenkachse und etwa in Richtung der Bandlaufrichtung liegt, unabhängig voneinander geringfügig verschwenkbar sind. Dadurch kann die Laufrichtung, also der Geradeauslauf, des darüberlaufenden Bandes eingestellt werden, wobei der Umschlingungswinkel wenigstens 90° betragen sollte.

Statt dessen besitzen bei den hier verwendeten Preßwalzenpaaren immer beide Walzen eine zylindrische Form. Eine der Walzen kann jedoch um eine Schwenkachse, die senkrecht zur Rotationsachse der Walze verläuft, geringfügig verschwenkt werden, um die Rotationsachsen der beiden Preßwalzen nicht exakt parallel, sondern mit einem geringen Zwischenwinkel einzustellen, und dadurch die Kaschierbahnen seitlich geringfügig auszulenken.

Zusätzlich können die Preßwalzenpaare selbstverständlich auseinandergefahren werden, um sie - vor allem für das Anfahren der Maschine - völlig außer Kontakt voneinander zu bringen.

Zu diesem Zweck sind die oberen Walzen der Preßwalzenpaare in der insgesamt anhebbaren, oberen Hälfte - sozusagen dem Deckel - des Trocknungskastens, gelagert, und können damit insgesamt angehoben werden. Zusätzlich kann bei jedem einzelnen Preßwalzenpaar der Abstand der Preßwalzen und damit die Stärke der durch sie verursachten Pressung eingestellt werden.

Um keine Biegespannungen im späteren Kernverbund auftreten zu lassen, wird der Kemverbund bis zum Ende der Trockenstrecke gerade geführt und das Umlenken sowie Aufwickeln auf die Kernbobine geschieht mit einem Umlenkradius bzw. Radius des Wickelkernes von mindestens 30 cm.

Ebenso besitzen auch die Kernbobinen einen solchen Mindest-Kerndurchmesser.

Um weiterhin beim Durchlauf durch die Maschine an keiner Stelle durch leicht differierende Antriebsgeschwindigkeiten der einzeln angetriebenen Preßwalzenpaare, Kontaktwalzen, Umlenkwalzen oder Bobinen unzulässige Längsspannungen auftreten zu lassen, sind alle mit dem Material in Verbindung kommenden Elemente über eine alle diese Elemente verbindende Antriebskette bzw. einen Antriebsriemen schlupffrei zueinander angetrieben.

Weiterhin sollte bei der erfindungsgemäßen Vorrichtung auf folgende Details einzeln und/oder in deren Zusammenwirken geachtet werden:
- daß die Preßwalzenpaare eine feste, insbesondere untere, Gegenwalze und eine von dieser abhebbare, insbesondere obere, Preßwalze umfassen, wobei die abhebbare Preßwalze um eine Schwenkachse, welche quer zur Rotationsachse der Preßwalze bzw. Gegenwalze verläuft, verschwenkbar ist;
- daß die Schwenkachse parallel zur Durchlaufrichtung durch die Trocknungsstrecke verläuft;
- daß die Schwenkachse lotrecht zur Durchlaufrichtung durch die Trocknungsstrecke verläuft;
- daß die Preßwalze und die Gegenwalze eine zylindrische Mantelfläche aufweisen;
- daß die Kernbobine nahe am Kontaktpunkt, also am Ende der Einbringstrecke, angeordnet ist, und die Kernschicht über ein quer zum Verlauf der bahnförmigen Kernschicht angeordnetes Einleitrohr horizontal dem Kontaktpunkt zugeführt wird;
- daß die Hälften
   - vom Spaltpunkt, also den Spaltwalzen aus, im gleichen Winkel nach oben bzw. unten weggeführt und/oder
   - dem Kontaktpunkt, also den Kontaktwalzen, im gleichen Winkel, symmetrisch zur Horizontalen, zugeführt werden;
- daß die Kernbobine mit Ihrer Hülse auf einem Spannkern aufgebracht ist, welcher in der Zentralwand einseitig gelagert und insbesondere gegen diese in seiner Axialrichtung verlagerbar ist;
- daß der Spannkern pneumatisch aufblähbar zum Verspannen der Hülse der Kernbobine ist;
- daß die Spaltwalzen in einem Rahmen montiert, insbesondere gelagert, sind, welcher bezüglich der Zentralwand wenigstens in der vertikalen Richtung verstellbar befestigt ist;
- daß von den Spaltwalzen wenigstens die eine Spaltwalze von der anderen Spaltwalze abhebbar, insbesondere mittels eines Pneumatikzylinders, ist;
- daß die Spaltwalzen an den freien Enden jeweils eines Armes angeordnet sind, welche über einen Querarm verbunden sind und der eine Arm als Schwenkarm ausgestaltet und schwenkbar gegenüber dem Querarm gelagert ist;
- daß wenigstens der schwenkbare Arm in seiner Arbeitsposition an einem gegenüber dem Querarm und/oder gegenüber dem Rahmen einstellbaren Anschlag anliegt;
- daß die Arme über eine Feder gegeneinander vorgespannt sind;
- daß in Durchlaufrichtung vor dem Trennpunkt ein Locher zum insbesondere regelmäßigen Lochen des bahnförmigen Kernverbundes, insbesondere in wenigstens einem, vorzugsweise beiden, Randbereichen angeordnet ist;
- daß in Durchlaufrichtung nach dem Kontaktpunkt eine Lochkontrolle zur Kontrolle der Paßlage der durch den Locher in den Hälften geschaffenen Löcher vorhanden ist;
- daß im Bereich der Einbringstrecke wenigstens eine der Umlenkwalzen der Hälften in ihrer Position so verlagerbar ist, daß der durch diese Hälfte während der Einbringstrecke, also vom Spaltpunkt bis zum Kontaktpunkt, zurückgelegte Weg verändert wird;
- daß die verlagerbare Umlenkwalze soweit verlagerbar ist, daß sie gleichzeitig zum Abheben der Hälfte von der jeweiligen Beleimstation dient;
- daß die Kernbobine durch eine Kupplung, insbesondere eine Einscheibenkupplung, insbesondere eine Magnetpulverkupplung, permanent gebremst, insbesondere regelbar gebremst, ist;
- daß die Beleimstationen an den Hälften innerhalb der Einbringstrecke in ihrer Position entlang des Verlaufes der Hälften verstellbar sind;
- daß
   - die dem Spaltpunkt zugeführte Kernverbund durch Abwickeln von einer Kaschierbobine zur Verfügung gestellt wird,
   - der Kernverbund durch Aufwickeln auf einer Kembobine gespeichert wird, wobei zwischen die einzelnen Lagen des Kernverbundes auf die Kernbobine eine Zwischenlage, welche von einer Zwischenlagenbobine abgewickelt wird, mit aufgewickelt wird, und
   - wobei die Bobinen einseitig an der Zentralwand frei auskragend gelagert und wenigstens die Kernbobine gegenüber dieser in Axialrichtung verlagerbar ist;
- daß die angetriebenen Walzen der Preßwalzenpaare, die Leimauftragswalzen der Beleimstationen, die Kernbobine sowie alle angetriebenen Umlenkwalzen des Kernverbundes, deren Hälften bzw. des Kernverbundes über ein gemeinsames mechanisches Antriebselement, insbesondere eine Antriebskette oder einen Antriebsriemen, schlupffrei miteinander verbunden sind;
- daß die Leimauftragswalzen der beiden Beleimstationen über einen Hilfsantrieb für den Fall antreibbar sind, daß wegen eines Stillstandes der Vorrichtung die Antriebskette stillsteht;
- daß die oberen Walzen der Preßwalzenpaare, welche innerhalb des Trocknungskastens angeordnet sind, in der oberen Hälfte des Trocknungskastens gelagert sind, und zusammen mit diesem insgesamt von der Trocknungsstrecke abgehoben werden können;
- daß wenigstens eine der auf der Einbringstrecke vorhandenen Umlenkwalzen, insbesondere die erste Umlenkwalze, in einem Pendellager gelagert ist zur Steuerung von Geradlauf und Fluchtung der darüber geführten Hälfte;
- daß der Kernkleber, insbesondere zur Verwendung im Rahmen eines der vorhergehenden Verfahren bzw. Vorrichtung, ein Kaltleim ist;
- daß der Kernkleber ein alterungsbeständiger, farbloser, mittels Feuchtigkeit nur durch sehr lange Einwirkungszeit von mehreren Stunden, insbesondere mehreren Tagen lösbarer Leim, insbesondere auf Zellulose-Ätherbasis ist;
- daß dem Kernkleber Fungizide und ein Säurepuffer, insbesondere Kalziumund/oder Magnesiumcarbonat, zugesetzt sind;
- daß der Carbonatzusatz insgesamt 3 bis 5 Gewichts-% des Kernklebers beträgt;
- daß der Kernkleber eine Mischung aus Methylzellulose und Carboxylzellulose als Basis aufweist;
- daß der Kernkleber Erdalkalisalze zur Komplexbildung mit den Schwermetallionen der Tinte enthält;
- daß der Kemkleber Farbpigmente zur Farbanpassung bzw. Opazitätsanpassung an die Hälften aufweist;
- daß der Kernkleber Akrylate zur Teilvernetzung und damit Verlängerung der Lösezeit des Kernklebers aufweist;
- daß der Kernkleber keine organischen Lösemittel aufweist;
- daß als Kemschicht zur Verwendung im Rahmen eines der vorhergehenden Verfahren bzw. Vorrichtung ein möglichst feines, reißfestes Gewebe aus nichtsaugendem Material, insbesondere ein Kunststoffgitter, verwendet wird;
- daß als Kemschicht ein Kernpapier von 5 bis 15 g/cm² verwendet wird, welches organische Fasern, insbesondere Hanffasern, Flachsfasern und/oder Leinenfasem mit 3 bis 30 Gewichts-% Anteil enthält;
- daß das Kempapier ungebleicht ist;
- daß das Kernpapier 3 bis 6 Gewichts-%, insbesondere etwa 5 Gewichts-% Carbonat, insbesondere Calcium- und/oder Magnesiumcarbonat, enthält;

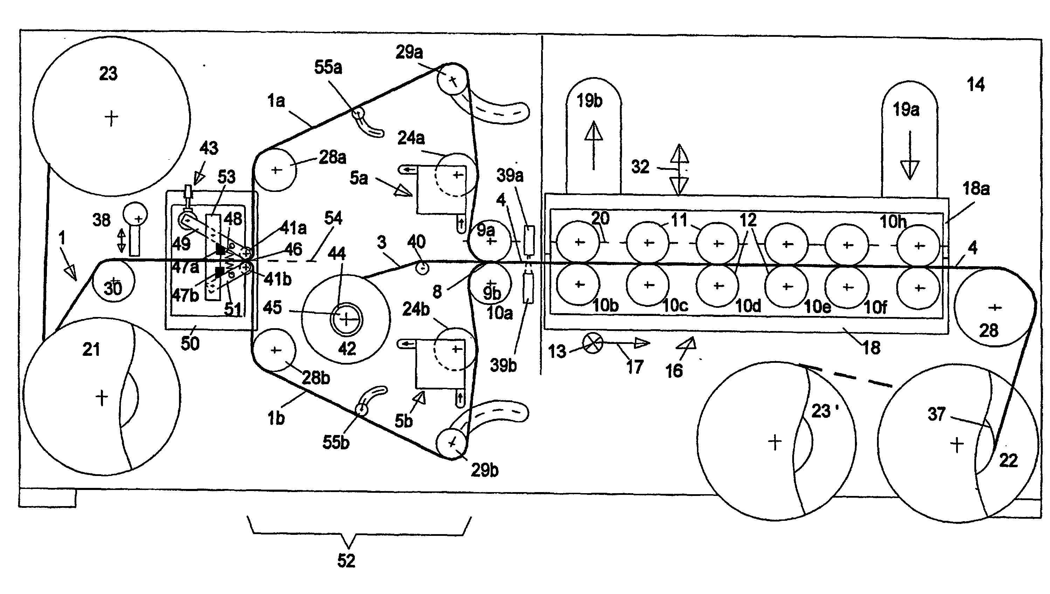

Eine Ausführungsform gemäß der Erfindung ist im Folgenden anhand der Figur näher beschrieben.

Die Figur zeigt die Frontansicht der Maschine, in welcher - in Durchlaufrichtung von links nach rechts - der zu bearbeitende Kaschierverbund 1 von einer Kaschierbobine 21 abgewickelt und zwischen einem Paar von Spaltwalzen 41a, 41b hindurch geführt und entlang der Mittelebene 54 gespalten wird. Über die anschließende Einbringstrecke 52, also vom Spaltpunkt 46 zwischen den Spaltwalzen 41a, 41b bis zum Kontaktpunkt 8, an dem die beiden Hälften 1a, 1b nach der separaten Weiterleitung wieder gegeneinander geführt werden - erfolgt das Beleimen sowie das Zuführen der Kernschicht 3, die von einer Kernbobine 42 abgewickelt wird. Am Kontaktpunkt 8 wird die Kernschicht 3 zwischen die Hälften 1a und 1b eingeführt und dort verklebt, wodurch der Kemverbund 4 entsteht.

Die Bahnen sind dabei in der Frontansicht gut zu sehen, da alle Bobinen, Umlenkwalzen und die Preßwalzenpaare 10a bis 10h nur auf der vom Betrachter abgewandten Rückseite in der senkrecht stehenden Zentralwand 14 einseitig und nach vorne frei auskragend gelagert sind. Dadurch ist das Beobachten des Einbringverlaufes durch den Bediener gut möglich, und es können auch die Veränderungen, die durch ein Nachregeln an der Maschine bewirkt werden, jederzeit gut beobachtet werden.

Durch das erste Preßwalzenpaar 10a wird der so entstandene Kernverbund 4, bestehend aus einer oberen Hälfte 1a, der mittig angeordneten Kernschicht 3 und einer unteren Hälfte 1b, ein erstes Mal gepreßt, um den mittels der Hälften aufgebrachten Kernkleber in der gewünschten Art und Weise in das Innere der Kernschicht bis in die Nähe der Längsmittelebene sowie in die Hälfte vordringen zu lassen.

Auch ist dieser Kernverbund 4 aufgrund des hier noch weichen Kernklebers schwer zu handhaben, und die einzelnen Schichten können leicht gegeneinander verrutschen.

Deshalb muß besonders die Seitensteuerung des im Durchlauf anschließend durch eine Trocknungsstrecke 16 geführten Kemverbundes 4 sehr behutsam vorgenommen werden, was bedeutet, daß nach Erstellen des Kernverbundes möglichst geringe, im Idealfall überhaupt keine, seitliche Steuerung, also eine aktive Auslenkung in Querrichtung 13, der Blickrichtung des Betrachters, vorgenommen werden.

Zu diesem Zweck wird versucht, die Hälften 1a und 1b innerhalb der Einbringstrecke 52 bereits vor Erreichen des Kontaktpunktes 8 und damit vor Erstellen des Kernverbundes 4 möglichst exakt im Hinblick auf die seitliche Führung und den seitlichen Versatz zu steuern.

Hierzu sind ggf. zwischen der Kaschierbobine 21 und den danach angeordneten Kontaktwalzen 9a, 9b nicht dargestellte Kantenabtastungen an der Zentralwand 14 angeordnet, welche den Abstand der der Zentralwand 14 nächstliegenden Kante der Bahn erfassen. Dies erfolgt insbesondere im Bereich der Einbringstrecke 52 an beiden Hälften 1a, 1b.

Dieses Signal wird an eine entsprechende Steuerung weitergegeben, die ihrerseits daraufhin den axialen Abstand der Kaschierbobine 21 von der Zentralwand 14 nachregelt, um die Kaschierbahn 1 exakt in Durchlaufrichtung zu führen.

Wird dagegen im Bereich der Einbringstrecke 52 ein mangelhafter Seitenabstand nur bei einer der Hälften 1a oder 1b festgestellt, so wird ggf. dies nur innerhalb der Einbringstrecke der betreffenden Hälfte 1a oder 1b nachgeregelt. Hierzu ist die jeweils erste Umlenkwalze 28a bzw. 28b in einem Pendellager gelagert, um durch geringfügige Winkeländerung zwischen der Rotationsachse dieser ersten Umlenkwalze 28 und der Fläche der Zentralwand 14 die Richtung der jeweiligen Hälfte 1a, 1b zu beeinflussen.

Ferner sind an jeder der Hälften 1a, 1b vor Erreichen des Kontaktpunktes 8, in der Regel sogar vor der jeweiligen Beleimstation 5a, 5b Spannungssensoren 55a, 55b in Form von quer zur Bahnrichtung federbeaufschlagten Umlenkrollen geordnet, um die momentane Spannung jeder der beiden Hälften 1a, 1b zu messen. Die beiden Hälften sollen mit exakt gleicher Zugspannung in den Kontaktpunkt 8 und damit den Kernverbund 4 eingebracht werden, um Längsspannungen im Kemverbund zu vermeiden.

Die von den Spannungssensoren 55a, 55b ermittelten Spannungswerte werden wiederum an eine Steuerung abgegeben, die bei Bedarf die Bremskraft, mit denen die Kaschierbobinen 21 und/oder die Kernbobine 42 gebremst wird, verstärkt oder abschwächt. Dies geschieht mit Hilfe der an sich bekannten Magnetpulverkupplungen, deren Bremskraft durch Veränderung des anliegenden Stromes bzw. der anliegenden Spannung exakt gesteuert werden kann.

Die Regelung der Seitenkantenabweichung und der Spannung ist für beide Hälften 1a, 1b getrennt und unabhängig voneinander möglich.

Im Umfangsbereich bilden die Hälften 1a, 1b ein zur Mittelebene, also insbesondere der Verbindungslinie zwischen dem Spaltpunkt 46 und dem Kontaktpunkt 8, symmetrisches, liegendes Trapez:

Die Kaschierbobine 21 befindet sich in Durchlaufrichtung vor, also links dieses Trapezes, jedoch unterhalb der Mittelebene 54. Die auf der Kaschierbobine mitgewickelte Zwischenlage wird auf der Zwischenlagenbobine 23, die sich im oberen Anfangsbereich der Zentralwand 14 befindet, aufgewickelt, während der Kaschierverbund 1 über eine etwa oberhalb der Kaschierbobine 21 angeordnete Umlenkwalze 30 horizontal dem Spaltwalzenpaar 41a, 41b zugeführt wird. In diesem horizontalen Abschnitt ist noch der Locher 38 entlang wenigstens einer der Seitenkanten des Kaschierverbundes 1 angeordnet, der beispielsweise aus einem quer zur Ebene des Kaschierverbundes 1 beweglichen Lochstempels besteht, welcher durch einen an der von der Bahn abgewandten Stirnseite angeordneten, den Lochstempel beaufschlagenden, rotierend antreibbaren Exzenter, angetrieben wird.

Von den Spaltwalzen 41a, 41b aus werden die beiden Hälften um die Spaltwalzen herum nach oben bzw. unten etwa rechtwinklig umgelenkt, und erst in ausreichendem Abstand oberhalb bzw. unterhalb der Mittelebene 54 über erste Umlenkwalzen 28 in eine schräge Vorwärtsrichtung mit zunehmendem Abstand von der Mittelebene 54 umgelenkt. Über eine weitere Umlenkwalze 29a, 29b erfolgt dann eine Umlenkung über mehr als 270°, so daß die jeweilige Hälfte 1a wiederum fast senkrecht nach unten bzw. oben auf die horizontale Mittelebene 54 hin abgelenkt wird und dort die jeweilige obere bzw. untere Kontaktwalze 9a bzw. 9b des Kontaktwalzenpaares erreicht, zwischen denen sich der Kontaktpunkt 8 befindet, indem zwischen diesem Kontaktwalzenpaar 9a, 9b, welches gleichzeitig das erste Preßwalzenpaar 10a darstellt, die beiden Hälften wieder zusammengeführt und gleichzeitig dazwischen die Kernschicht 3, die von der Kernbobine 42 abgewickelt wird, dazwischen eingeführt wird.

Da sich die Kernbobine 42 unterhalb der Mittelebene 54 innerhalb des Trapezes der Einbringstrecke an der Zentralwand 14 befindet, wird die Kemschicht.3 über eine zwischen der Kernbobine 42 und dem Kontaktpunkt 8 auf gleicher Höhe mit dem Kontaktpunkt 8 befindliches Einleitrohr 40 exakt horizontal, also mit gleichem Winkel zur oberen und unteren Hälfte 1a bzw. 1b, in den Kontaktpunkt 8 eingeführt.

Auf der Strecke zwischen den Umlenkwalzen 29 und der jeweiligen Kontaktwalze 9 ist auf der Innenseite des Trapezes an jeder Hälfte 1a, 1b jeweils eine Beleimstation 5a, 5b angeordnet, die die einander zugewandten Seiten der Hälfte 1a bzw. 1b mit Kernkleber benetzen. Dabei ist eine möglichst geringflächige, idealerweise nur linienförmige, Berührung zwischen der Hälfte 1a und der Leimauftragwalze 24a bzw. 24b erwünscht. Die Leimauftragswalze 24 taucht dabei jeweils - wie an sich bekannt - in einen nach oben zur Leimauftragwalze hin offenen Leimvorratsbehälter, die sogenannte Vorlage, ein. Diese Vorlage steht über einen bodenseitigen Zufluß sowie einen Überlauf ggf. mit einer größeren Leimaufbereitungsanlage in Verbindung.

Die in Durchlaufrichtung unmittelbar vor den Beleimstationen 5a bzw. 5b angeordneten Umlenkwalzen 29a bzw. 29b können dabei so entlang der Zentralwand 14 bewegt werden, daß sie die bahnförmige jeweilige Hälfte 1a bzw. 1b außer Kontakt mit der Leimauftragwalze 24a bzw. 24b bringen.

In der Arbeitsposition der Umlenkwalzen 29a, 29b muß durch Anschläge für diese Walze sichergestellt sein, daß für beide Hälften 1a, 1b der Weg vom Spaltpunkt 46 zum Kontaktpunkt 8 gleich lang ist, da nur dann in Längsrichtung betrachtet eine Übereinstimmung der durch den Locher 38 erzeugten Löcher auch im fertig erstellten Kernverbund erzielt werden kann Ist dies nicht der Fall, wird durch Verlagerung einer der Umlenkwalzen 29a oder 29b die Weglänge für die betreffende Hälfte 1a bzw. 1b vergrößert oder verkleinert, und zu diesem Zweck auch die entsprechenden Anschläge für die Arbeitsposition der Umlenkwalze 29a bzw. 29b neu justiert, bis eine Fluchtung der Löcher in Längsrichtung wieder erreicht ist.

Auch eine Fluchtung in Querrichtung muß gegeben sein und wird kontrolliert, und bei nicht zufriedenstellender Fluchtung wird eine der beiden ersten Umlenkwalzen 28a bzw. 28b innerhalb der Einbringstrecke 52 in ihrem Pendellager so verstellt, daß eine seitliche Auslenkung der Hälfte 1a bzw. 1b erzielt wird. Die Übereinstimmung der Löcher in den beiden Hälften 1a, 1b im fertigen Kernverbund wird zum einen durch eine Lochkontrolle 39 direkt hinter den Kontaktwalzen 9a, 9b, also noch vor Einlauf in die Trockenstrecke 16, überprüft. Hierzu ist insbesondere eine Bestrahlungseinheit 39a oberhalb der Bahn eingesetzt, während von einem darunter angeordneten optischen Sensor 39b die Menge des durch ein Loch hindurchtretenden Lichtes gemessen wird, wobei der Sollwert diejenige Lichtmenge ist, die durch ein vollständig geöffnetes, nicht versetztes Loch hindurchdringt. Zu diesem Zweck müssen die Löcher so weit außen in den Hälften 1a, 1b angeordnet sein, daß sie durch die schmalere, mittig eingebrachte Kernschicht nicht abgedeckt werden.

Da beim Einlauf des Kernverbundes 4 in die Trocknungsstrecke 16 der Kernverbund noch nicht abschließend stabilisiert ist, wird die gleiche Lochkontrolle ggf. mit einer gleich aufgebauten Einheit nochmals hinter dem Auslauf aus der Trocknungsstrecke 16 angeordnet.

Die Spalteinheit ist innerhalb eines Rahmens 50 montiert, der an der Zentralwand 14 befestigt und gegenüber dieser vor allem in der vertikalen Richtung verstellbar ist. Die Spaltwalzen 41a, 41b sind an den vorderen Enden von Armen 49, 51 drehbar, nicht angetrieben, gelagert, und besitzen einen Durchmesser von 18 mm. Die beiden Arme 49, 51 sind über eine Feder 48 gegeneinander vorgespannt, so daß jede der Spaltwalzen mit gleicher Kraft gegen den Kaschierverbund 1 drückt. Der obere der beiden Arme 49 ist als zweiarmiger Hebel ausgebildet und schwenkbar gegenüber einem vertikalen Querarm gelagert. Am hinteren, freien Ende ist dieser Arm 49 mit einer Rolle ausgestattet, auf welche ein Pneumatikzylinder 43 entgegen der Kraft der Feder 48 einwirkt. Durch das Ausfahren des Pneumatikzylinders wird der obere Hebel 49 verschwenkt und dadurch die obere Spaltrolle 41a von der unteren 41b abgehoben. Wenigstens der untere Arm 51 ist entweder fest an dem vertikalen Querarm 53 oder dem Rahmen 50 befestigt, oder schwenkbar an dem vertikalen Querarm 53 befestigt, jedoch in seiner am weitesten gegen den Kaschierverbund 1 gerichteten Stellung in einem Anschlag 47b begrenzt. Gleiches kann für den oberen Arm 49 ebenfalls durch einen Anschlag 47a der Fall sein.

Von dem Ende der Einbringstrecke 52 aus durchläuft der Kemverbund 4 weiterhin horizontal die Trocknungsstrecke 16, die aus einem bis auf Einlaß- und Auslaßöffnung geschlossenen Trocknungskasten 18 besteht.

Durch diesen Trocknungskasten 18 wird über einen Lufteinlaß 19a, der sich in der Nähe des Auslaufes für den Kernverbund befindet, trockene Luft eingeblasen und über einen Luftauslaß 19b, der sich in der Nähe des Einlasses für den Kernverbund 4 befindet, mit Feuchtigkeit aus dem Kemverbund, insbesondere aus dem Kernkleber, befrachtete Luft abtransportiert. Die Trocknungsluft kann je nach Umgebungstemperatur, Beschaffenheit des Klebers und der übrigen Materialien etc. auch beheizt werden.

Innerhalb des Trocknungskastens 18 wird der Kernverbund auch mehrfach hintereinander gepreßt, indem er mehrere Preßwalzenpaare 10b, 10c... durchläuft, die den Kernverbund 4 zunehmend quer zu seiner Hauptebene preßt. Da in den Preßwalzenpaaren 10b, 10c nur Linienberührung, jedenfalls nur kleinflächige Berührung vorherrscht, steht ein Großteil der Durchlaufstrecke zum Konvektionstrocknen mittels der anfangs trockenen Luft zur Verfügung.

Das stufenweise Pressen bewirkt zum einen, daß der Kernkleber immer weiter in die anliegenden Materialien eindringt, und - bei einem Kernmaterial mit Hohlräumen bzw. mit ausreichender Saugfähigkeit - auch in das Kernmaterial. Durch die saugfähigen Bestandteile wird die im Kernkleber enthaltene Feuchtigkeit in die anliegenden, saugfähigen Bereiche abgeführt, wodurch sich der Kleber schnell verfestigt, und der Kernverbund eine sehr schnell zunehmende Festigkeit erhält.

Mittels der Konvektionstrocknung wird die im gesamten Verbund verteilte Feuchtigkeit über die Außenflächen nach und nach abgeführt, und durch das zunehmende Pressen auch stufenweise immer von den inneren, feuchtesten Bereichen zu den außen liegenden, trockensten Bereichen nachgefördert.

Dadurch ist auf einer sehr kurzen Trocknungsstrecke 16 eine sehr effiziente Trocknung des Kemverbundes 4 möglich.

Die einzelnen Preßwalzenpaare 10a, 10b ... bestehen dabei jeweils aus einer unteren Gegenwalze 12, die fest, wiederum jedoch nur einseitig, in der Zentralwand 14, bzw. der unteren Hälfte des Trocknungskastens 18, gelagert and angetrieben sind.

Bei der Führung des Kernverbundes 4 ist es wichtig, daß der Kernverbund 4 im Verlauf der Trocknungsstrecke 16 gerade geführt wird, also keine Biegungen im Kemverbund 4 durch die dabei stattfindende Trocknung fixiert werden.

Zu diesem Zweck sind die einzelnen Preßwalzenpaare 10b, 10c...in einem so geringen Abstand zueinander angeordnet, daß dazwischen noch keine nennenswerte Durchbiegung des Kernverbundes 4 auftreten kann, andererseits aber eine ausreichende freie Länge des Kernverbundes 4zwischen den Preßwalzenpaaren 10b, 10c...zum Überstreichen mit der trockenen Luft vorhanden ist, die innerhalb des Trocknungskastens 18 durch nicht dargestellte Leiteinrichtungen in der gewünschten Weise verteilt und geführt wird.

Gegen die unterhalb des Kernverbundes 4 angeordneten Gegenwalzen 12 preßt jeweils von oben her eine oberhalb des Kernverbundes 4 angeordnete Preßwalze 11, die nicht angetrieben ist, sondern nur durch ihre Auflage auf dem Kernverbund mittels ihres Eigengewichtes und/oder Anpressung mitläuft.

Diese Preßwalzen 11 sind ebenso wie die Walzen 12 nicht ballig, sondern möglichst exakt zylindrisch geformt, und einseitig gelagert, jedoch nicht direkt in der Zentralwand 14, sondern in der oberen Hälfte 18a des Trocknungskastens 18, welcher insgesamt gegenüber dem Unterteil 18b und damit gegenüber den unteren Gegenwalzen 12 angehoben werden kann.

Dadurch werden die Preßwalzenpaare auf der Trocknungsstrecke 18 außer Funktion gesetzt, was insbesondere zum Reinigen der Maschine, zum Anlauf der Maschine etc. von Vorteil ist.

Zusätzlich kann jede einzelne Preßwalze 11 separat und unabhängig von den anderen Preßwalzen im Abstand relativ zu ihrer Gegenwalze 12 verändert werden, und damit die Stärke der Pressung variiert werden. Darüber hinaus kann eine seitliche Steuerung des Kernverbundes in begrenztem Maße erzielt werden, indem die Preßwalze 11 nicht exakt parallel zur Gegenwalze 12 liegen muß, sondern dabei auch ein geringer Zwischenwinkel zwischen den beiden Rotationsachsen im Bereich von Bruchteilen eines Winkelgrades einstellbar sind.

Zu diesem Zweck ist jede Preßwalze 11 um eine Schwenkachse 20, welche im rechten Winkel zur Rotationsachse der Preßwalze 11 verläuft und vorzugsweise parallel zur Durchlaufrichtung 17 des Kernverbundes 4, geringfügig verschwenkbar.

Erst nach dem Verlassen der Trocknungsstrecke 16 wird der Kemverbund auf eine Verbundbobine 22 aufgewickelt, und muß zu diesem Zweck rundgebogen werden. Um diese Biegung möglichst gering ausfallen zu lassen, besitzt diese Verbundbobine 22 einen Kern mit mindestens 30 cm Durchmesser, und auch die vorher zwischen dem Ende des Trocknungskastens 18 und der Verbundbobine 22 angeordnete Umlenkrolle 28 besitzt mindestens einen solchen Durchmesser.

Die Verbundbobine 22 ist dabei relativ niedrig an der Zentralwand 14 angeordnet, und zwar im Bereich etwa unterhalb des Endes der Trocknungsstrecke 16, also des Trocknungskastens 18.

Daneben und in etwa auf gleicher Höhe ist eine Zwischenlagenbobine 23' angeordnet, auf der ein Zwischenlagenmaterial aufgewickelt ist, welches in bestimmten Anwendungsfällen zwischen die einzelnen Schichten des Kemverbundes auf die Verbundbobine 22 mit aufgewickelt werden muß, um ein Verkleben der einzelnen Schichten des Kernverbundes 4 gegeneinander zuverlässig zu vermeiden.

Um ein spannungsarmes Endprodukt zu erzielen, werden mittels der primären Antriebskette 25 alle relevanten, angetriebenen Bauteile angetrieben, so daß deren exakt gleich schneller Lauf erzielt werden kann ohne aufwendige elektronische Steuerungsmechanismen. Anstelle einer Kette kann auch ein Zahnriemen oder ein anderes schlupffreies Antriebselement verwendet werden.

Vom Hauptmotor, der die Antriebskette antreibt, erstreckt sich diese - im Uhrzeigersinn betrachtet - über eine Umlenkrolle zur Leimauftragwalze 24b der unteren Beleimungsstation 5b, von dort zur Umlenkwalze 30 vor der Einbringstrecke 52, weiter zur Leimauftragwalze 24a der oberen Beleimungsstation 15a und von dort über eine Umlenkrolle zur unteren, der Gegenwalze 12,des ersten Preßwalzenpaares 10a.

Von dort aus treibt die Antriebskette weiterhin auch alle anderen unteren Gegenwalzen 12 der Preßwalzenpaare 10b bis 10h innerhalb des Trocknungskastens 18 an, wobei zwischen zwei benachbarten Gegenwalzen 12 jeweils ein Umlenk- bzw. Spannritzel angeordnet ist.

Nach dem letzten Preßwalzenpaar 10h läuft die Antriebskette über die hintere Umlenkwalze und ein kleines Umlenkritzel zurück zum Hauptmotor.

Da auch beim Stillstand der gesamten Maschine wegen einer Fehlfunktion, eines Unfalls etc. die Leimauftragswalzen 24a, 24b der Beleimungsstationen 5a, 5b weiterhin angetrieben werden müssen, um die Verhärtung des Klebers an ihrer Oberfläche zu vermeiden - was natürlich in einem von der jeweiligen Bahn abgehobenen Position erfolgt - sind die beiden Leimauftragswalzen 24a, 24b zusätzlich mittels einer Hilfskette von einem Hilfsmotor aus antreibbar.

### BEZUGSZEICHENLISTE

- 1: Kaschierverbund
- 1a, 1b: obere, untere Hälfte
- 2a, 2b: Kaschierung,
Kaschierbahn
- 3: Kembahn
- 4: Kemverbund
- 5a: Beleimstation
- 6a, b: Vorlagen
- 7: Aufbereitung,
Kaschierkleber-
Aufbereitung
- 8: Aufbringpunkt
- 9a, 9b: Kontaktwalze
- 10a-h: Preßwalzenpaare
- 11: Preßwalze
- 12: Gegenwalze
- 12a: Kaschierbahn
- 13: Kaschierbahn
- 14: Zentralwand
- 16: Trocknungsstrecke
- 17: Durchlaufrichtung
- 18: Trocknungskasten
- 18a: obere Hälfte
- 19a: Lufteinlaß
- 19b: Luftauslaß
- 20: Schwenkachse
- 21: Umlenkrolle
- 21 a: Kaschierbobine
- 22: Verbundbobine
- 23, 23': Zwischenlagenbobine
- 24a,b: Leimauftragswalze,
Auftragswalze
- 25: Antriebskette
- 26: Formatbehälter
- 27: Transportwalze
- 28a, 28b: 1. Umlenkwalze
- 29a, 29b: 2. Umlenkwalze
- 30: Umlenkwalze
- 31a,b: Kastenabtastungen
- 32: Pfeil
- 33: Hauptmotor
- 34: Hilfsmotor
- 35: Hilfskette
- 36a,b: Spannungssensoren
- 37: Wickelkem
- 38: Locher
- 39: Lochkontrolle
- 40: Einleitrohr
- 41a, 41b: Spaltwalzen
- 42: Kernbobine
- 43: Pneumatikzylinder
- 44: Hülse
- 45: Spannkern
- 46: Spaltpunkt
- 47a: Anschlag
- 48: Feder
- 49a: Schwenkarm
- 50: Rahmen
- 51: Arm
- 52a, 52b: Einbringstrecke
- 53: Querarm
- 54: Mittelebene
- 55a, 55b: Spannungsmesser

## Patentansprüche

1. Verfahren zum Einbringen einer Kernschicht (3) in die Mittelebene eines außen kaschierten blattförmigen Materials (1), insbesondere als zweiter Schritt für das Restaurieren von Papierblättern, insbesondere Buchseiten, an welchen sich das Ablösen der Kaschierungen als letzter Arbeitsschritt anschließt, mit folgenden Schritten:
- auseinander Reißen der oberen und unteren Hälften 1a und 1b des Kaschierverbundes (1),
- Aufkleben der beiden Hälften (1a, 1b) auf die beiden Seiten einer Kernschicht (3),
**dadurch gekennzeichnet, daß**
das Einbringen im Durchlaufverfahren erfolgt, indem
- von dem bahnförmigen Kaschierverbund (1) die beiden Hälften (1a, 1b) über Umlenkkörper auseinander geführt werden,
- die Hälften (1a, 1b) im Abstand zueinander über eine Einbringstrecke (52) geführt, und
- am Ende der Einbringstrecke (52) wieder unter Zwischenlegen einer Kernschicht (3) indirekt miteinander verklebt werden, und
- der Kernverbund (4) quer zu seiner Ebene gepreßt wird.

2. Verfahren nach Anspruch 1,
**dadurch gekennzeichnet, daß**
dieser Kernverbund (4) im Durchlaufverfahren insbesondere mittels vorbeiströmender, trockener Luft getrocknet wird.

3. Verfahren nach einem der vorhergehenden Ansprüche,
**dadurch gekennzeichnet, daß**
die Umlenkkörper Spaltwalzen (41a, 41b) sind.

4. Verfahren nach einem der vorhergehenden Ansprüche,
**dadurch gekennzeichnet, daß**
der Kernverbund (4) beim Trocknen und insbesondere auch beim Pressen gerade, insbesondere horizontal, geführt wird.

5. Verfahren nach einem der vorstehenden Ansprüche,
**dadurch gekennzeichnet, daß**
am Kontaktpunkt (8) sowohl die obere Hälfte (1a) als auch die untere Hälfte (1b) gleichzeitig mit der Kernbahn (3) in Kontakt kommen.

6. Verfahren nach einem der vorstehenden Ansprüche,
**dadurch gekennzeichnet, daß**
die der Kernschicht (3) zugewandten Seiten der Hälften (1a, 1b) im Verlauf der Einbringstrecke (52) beleimt werden.

7. Verfahren nach einem der vorhergehenden Ansprüche,
**dadurch gekennzeichnet, daß**
das paßgenaue Aufeinandertreffen der oberen und unteren Hälfte (1a, 1b) innerhalb des Kernverbundes (4) in Durchlaufrichtung hinter dem Kontaktpunkt (8) für die Durchlaufrichtung, insbesondere auch für die Querrichtung, kontrolliert wird.

8. Verfahren nach Anspruch 7,
**dadurch gekennzeichnet, daß**
das paßgenaue Übereinstimmen in Durchlaufrichtung durch Einstellen der Länge der Einbringstrecke (52) der beiden Hälften (1a, 1b) relativ zueinander erreicht wird.

9. Verfahren nach einem der vorhergehenden Ansprüche,
**dadurch gekennzeichnet, daß**
die Preßwalzenpaare (10) aus einer Preßwalze (11) und einer Gegenwalze (12) bestehen, deren Rotationsachsen im wesentlichen parallel zueinander verlaufen, deren Zwischenwinkel jedoch geringfügig veränderbar ist und deren Abstand sowie Anpreßkraft radial gegeneinander veränderbar ist.

10. Vorrichtung zum Einbringen einer Kernschicht (3) in die Mittelebene eines außen kaschierten blattförmigen Materials (1), insbesondere zur Durchführung des Verfahrens nach einem der vorhergehenden Ansprüche,
**dadurch gekennzeichnet, daß**
- am Beginn einer Einbringstrecke (52) zwei gegeneinander drückende Umlenkelemente, insbesondere Spaltwalzen (41) auf den Außenseiten des blattförmigen Materials (1) vorgesehen sind, über welche die Hälften (1a, 1b) des blattförmigen Materials (1) auseinandergezogen und über Umlenkwalzen einem Kontaktpunkt (8) am Ende der Einbringstrecke (52) zugeführt werden, welcher insbesondere auf der gleichen horizontalen Ebene wie der Spaltpunkt (46) zwischen den Umlenkelementen, insbesondere Spaltwalzen (41) liegt
- eine in Durchlaufrichtung (17) nachgeordnete Trocknungsstrecke (16) vorgesehen ist zum Trocknen und Pressen des Kernverbundes (4), wobei der Kemverbund in der Trocknungsstrecke (16) verläuft.

11. Vorrichtung nach Anspruch 10,
**dadurch gekennzeichnet, daß**
die Trocknungsstrecke (16) aus einem im wesentlichen geschlossenen Trocknungskasten (18) besteht, in welchem entlang der Trocknungsstrecke (16) mehrerer Preßwalzenpaare (10b-10h) angeordnet sind, und der Trocknungskasten (18) wenigstens einen Lufteinlaß und wenigstens einen Luftauslaß (19a, 19b) zum Hindurchpumpen von trockener Luft aufweisen.

12. Vorrichtung nach einem der vorstehenden Ansprüche,
**dadurch gekennzeichnet, daß**
alle sich über die Breite des Kernverbundes (1) bzw. Kernverbundes (4) in Querrichtung (13) erstreckenden Baugruppen der Vorrichtung in Querrichtung (13) nur an einem Ende an einer Zentralwand (14) befestigt bzw. gelagert und am in Querrichtung anderen Ende frei auskragend ausgebildet sind.

13. Vorrichtung nach einem der vorhergehenden Vorrichtungsansprüche,
**dadurch gekennzeichnet, daß**
innerhalb der Einbringstrecke (52) im Freiraum zwischen den im Abstand zueinander geführten Hälften (1a, 1b) Beleimstationen (5a, 5b) zum Beleimen der gegeneinander gerichteten Seiten der Hälften (1a, 1b) vorhanden sind undloder eine Kernbobine (42) zum Zuliefern der bahnförmigen Kernschicht (3).

## Claims

1. A method for coating a central layer (3) in the central plane of an outside lined sheet shaped material (1), in particular as a second stage to restoring the paper sheets, in particular of the book sheets, whereupon the removal of the pasting is thought to be the last working stage, with the following stages:
- the detachment of the upper and the lower halves 1a and 1b of the lined sheet (1) from each other,
- the binding of both halves (1a, 1b) on the both sides of a central layer (3), **characterized in that** the coating is carried out while the process is under way, whereupon
- both halves (1a, 1b) of the lined sheet (1) will be separately passed by way of some guiding means,
- the halves (1a, 1b) are being passed at distance from each other alongside a coating section (52) and
- at the end of the coating section (52) they will be again indirectly bound by placing between them a central layer (3) and
- the central layer (4) will be vertically pressed against them.

2. A method according to claim 1, **characterized in that** this central layer (3) will be dried while the process is under way by means of a passing by dried air.

3. A method according to any one of the preceding claims, **characterized in that** the guiding means (41a, 41b) are removal rollers.

4. A method according to any one of the preceding claims, **characterized in that** the central layer (3), when dried and in particular pressed, will be passed straight and horizontally in particular.

5. A method according to any one of the preceding claims, **characterized in that** at the contact point (8), both the upper half (1a) and the lower half (1b) come into contact with the central layer (3) at the same time.

6. A method according to any one of the preceding claims, **characterized in that** the surfaces of both halves (1a, 1b) contiguous with the central layer (3) will be glued while passing through the coating section (52).

7. A method according to any one of the preceding claims, **characterized in that** the accurate superimposition of both the upper and the lower halves (1a, 1b) to the central layer (3) after the contact point (8) in the travel direction, will be controlled for the travel direction and in particular for the normal direction.

8. A method according to claim 7, **characterized in that** the setting of the accurate superimposition in the travel direction will be carried out by means of adjusting the length of the coating section (52) of both halves (1a, 1b) one with respect to the other.

9. A method according to any one of the preceding claims, **characterized in that** the pairs of pressing rollers (10) consist of a pressing roller (11) and an opposed roller (12) whose swivelling pins are essentially arranged in parallel one with respect to the other, there being the possibility to alter slightly the angle between them while the distance as well as the pressing force may be radial changed.

10. An apparatus for coating a central layer (3) in the central plane of an outside lined sheet shaped material (1), in particular for carrying out the method according to any one of the preceding claims, **characterized in that**
- at the beginning of a coating section (52) there are arranged on the outer side of the sheet shaped material (1) two guiding means pressing one against the other, in particular removal rollers (41), whereby the halves (1a, 1b) of the sheet shaped material (1) will be moved away from each other by means of the guiding rollers and passed towards a contact point (8) at the end of the coating section (52), which in particular is arranged in the same horizontal plane with the removal point (46) arranged between the guiding means, in particular removal rollers (41),
- after them, in the travel direction (17) there is arranged a drying section (16) for drying and pressing the central layer (3), wherein the layer passes through the drying section (16).

11. An apparatus according to claim 10, **characterized in that** the drying section (16) consists of an essentially closed drying box (18) where several pairs of pressing rollers (10b, 10h) are arranged alongside the drying section (16), and the drying box (18) has at least one air intake and an air exhaust (19a, 19b) to pump up the dried air through them.

12. An apparatus according to any one of the preceding claims, **characterized in that** all the structural units of the apparatus extending in the normal direction (13) to the width of the lined layer (1) respectively to the central layer (3) are fixed, respectively mounted on bearings in the normal direction (13) only at one end of a central wall (14) and in a freely cantilevered relationship at the other end in the normal direction.

13. An apparatus according to any one of the preceding claims, **characterized in that** inside the coating section (52) in the open space between the halves (1a, 1b) which are moved away from each other, there are arranged pasting stations (5a, 5b) for pasting the face to face orientated surfaces of the halves (1a, 1b) and/or a central reel (42) for providing the strip shaped central layer (3).

## Revendications

1. Procédé visant le dépôt d'une couche médiane (3) dans le plan médian d'un matériau se présentant sous forme de feuille (1), présentant une doublure sur la face externe, en particulier en tant que seconde étape de travail lors de la restauration des feuilles de papier et notamment des livres, où le détachement de la doublure représente l'étape finale de travail, le procédé comportant les étapes suivantes:
- le détachement par écartement réciproque de la moitié supérieure et de la moitié inférieure 1a et 1b composant la doublure de matériau central (1)
- le collage des deux moitiés (1a, 1b) contre les deux côtés d'une couche médiane (3), **caractérisé en ce que** le dépôt a lieu durant le déroulement du processus, où
- les deux moitiés (1a, 1b) de la doublure de matériau central (1) sont entraînées individuellement au moyen d'éléments de guidage
- les moitiés (1a, 1b) sont entraînées à distance l'une de l'autre le long d'une zone de revêtement (52) et où
- au bout de la zone de revêtement (52), les deux moitiés sont à nouveau collées indirectement, une couche médiane (3) étant disposée entre elles et où
- la couche médiane (4) est pressée perpendiculairement contre le plan desdites moitiés.

2. Procédé selon la revendication 1, **caractérisé en ce que** le séchage de la couche médiane (4) se fait durant le déroulement du processus, le séchage ayant lieu au moyen du passage en sa proximité d'un courant d'air asséché.

3. Procédé selon l'une des revendications précédentes, **caractérisé en ce que** les éléments de guidage (41a, 41b) sont des cylindres de détachement.

4. Procédé selon l'une des revendications précédentes, **caractérisé en ce que** lors du séchage et en particulier lors du pressage, la couche médiane (4) poursuit son parcours droit, en particulier à l'horizontal.

5. Procédé selon l'une des revendications précédentes, **caractérisé en ce que** au point de contact (8), tant la moitié supérieure (1a) que la moitié inférieure (1b) viennent en contact avec la couche médiane (3) au même instant.

6. Procédé selon l'une des revendications précédentes, **caractérisé en ce que** les surfaces des moitiés (1a, 1b) avoisinées à la couche médiane (3) sont enduites de colle lors de leur passage dans la zone de revêtement (52).

7. Procédé selon l'une des revendications précédentes, **caractérisé en ce que** après le point de contact (8), la superposition parfaite de la moitié supérieure et de la moitié inférieure (1a, 1b) à la couche médiane (4) dans le sens de défilement est contrôlée notamment pour ce qui concerne le sens de défilement et pour la direction perpendiculaire.

8. Procédé selon la revendication 7, **caractérisé en ce que** le contrôle de la superposition parfaite dans le sens de défilement est obtenu en ajustant la longueur de la zone de revêtement (52) pour les deux moitiés (1a, 1b), relatives l'une par rapport à l'autre.

9. Procédé selon l'une des revendications précédentes, **caractérisé en ce que** les paires de cylindres presseurs (10) sont constituées d'un cylindre presseur (11) et d'un cylindre opposé (12) dont les axes de rotation sont essentiellement disposées parallèlement l'un par rapport à l'autre, l'angle qui les sépare pouvant cependant être modifié dans une petite mesure, tendis que la distance et la force de pressage l'une contre l'autre peuvent être modifiées radialement.

10. Dispositif pour le dépôt d'une couche médiane (3) dans le plan médian d'un matériau se présentant sous forme de feuille (1), présentant une doublure sur la face externe, en particulier pour la mise en oeuvre du procédé selon l'une des revendications précédentes, **caractérisé en ce que**
- deux éléments de guidage se pressant l'un contre l'autre sont prévus au début d'une zone de revêtement (52), sous le côté extérieur du matériau se présentant sous forme de feuille (1), ces éléments de guidage étant notamment des cylindres de détachement (41), au moyen desquels les moitiés (1a, 1b) du matériau se présentant sous forme de feuille (1) sont détachées l'une de l'autre et entraînées au moyen de cylindres de guidage vers un point de contact (8) se trouvant au bout de la zone de revêtement (52), placé en particulier dans le même plan horizontal avec le point de détachement (46) arrangé entre les éléments de guidage, notamment des cylindres de détachement (41),
- après ces postes de travail, dans le sens de défilement (17), une zone de séchage (16) est prévue pour le séchage et le pressage de la couche médiane (4), où la couche médiane défile dans la zone de séchage (16).

11. Dispositif selon la revendication 10, **caractérisé en ce que** la zone de séchage (16) est constituée d'un caisson de séchage (18) sensiblement fermé, présentant au moins une entrée d'air et une sortie d'air (19a, 19b) pour le pompage de l'air asséché, plusieurs paires de cylindres presseurs (10b - 10h) étant disposées le long de ladite zone de séchage (16).

12. Dispositif selon l'une des revendications précédentes, **caractérisé en ce que** tous les composants du dispositif, qui s'étalent en direction perpendiculaire (13) sur la largeur du matériau central (1) respectivement de la couche médiane (4) ne sont fixés, respectivement logés dans des paliers en direction perpendiculaire (13) que d'un côte de la paroi centrale (14), tendis qu'ils sont fixés librement en porte-à-faux de l'autre côté.

13. Dispositif selon l'une des revendications précédentes, **caractérisé en ce que** des poste d'encollage (5a, 5b) et/ou une bobine médiane (42) qui assure l'alimentation en couche médiane (3) sous forme de bande sont placés à l'intérieur de la zone de revêtement (52), dans l'interstice existant entre les moitiés (1a, 1b) entraînées à distance l'une de l'autre, ces postes d'encollage (5a, 5b) visant à réaliser l'encollage des surfaces orientées l'une vers l'autre des moitiés (1a, 1b).
